(19) **Europäisches Patentamt**
**European Patent Office**
**Office européen des brevets**

(11) **EP 1 987 644 B1**

(12) **EUROPEAN PATENT SPECIFICATION**

(45) Date of publication and mention
of the grant of the patent:
**20.07.2011 Bulletin 2011/29**

(51) Int Cl.:
**H04L 25/493** (2006.01)

(21) Application number: **07705808.9**

(22) Date of filing: **06.02.2007**

(86) International application number:
**PCT/IB2007/050397**

(87) International publication number:
**WO 2007/093935 (23.08.2007 Gazette 2007/34)**

(54) **Data communication method, data transmission and reception device and system**

Datenkommunikationsverfahren sowie Datensende- und -empfangsvorrichtung und -system

Méthode de communication de données, dispositif et système d'émission et de réception de données

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.02.2006 EP 06101602**

(43) Date of publication of application:
**05.11.2008 Bulletin 2008/45**

(73) Proprietor: **NXP B.V.
5656 AG Eindhoven (NL)**

(72) Inventors:
• **SVANELL, Karl, O.
Redhill Surrey RH1 5HA (GB)**

• **BOIJORT, Daniel, J.
Redhill Surrey RH1 5HA (GB)**
• **KATOCH, Atul
Redhill Surrey RH1 5HA (GB)**

(74) Representative: **Williamson, Paul Lewis et al
NXP Semiconductors UK Ltd.
Intellectual Property Department
Betchworth House
57-65 Station Road
Redhill
Surrey RH1 1DL (GB)**

(56) References cited:
**US-A1- 2003 016 056   US-A1- 2004 161 051**

**Description**

The present invention relates to a method for communicating data over a data communication bus comprising a first conductor and a set of further conductors;

the present invention further relates to a data transmission device for providing a data communication bus comprising a first conductor and a set of further conductors with data;
the present invention further relates to a data reception device for receiving data from a data communication bus comprising a first conductor and a set of further conductors; and
the present invention further relates to a system implementing the method for communicating data over a data communication bus comprising a first conductor and a set of further conductors.

The ongoing downscaling of semiconductor feature sizes such as feature sizes in CMOS processes facilitates the manufacture of future integrated circuits (ICs) that are smaller and have higher feature densities compared to contemporary ICs. This trend is a double-edged sword; it provides the opportunity for the generation of more complex ICs that may incorporate large systems on a single chip, but at the same time, it also causes more difficult design challenges.
Some of these challenges are in fact already relevant for the design of contemporary ICs. For instance, a present problem is how to ensure uncorrupted data communication between a data source and a data destination, e.g. data communication between two processing units over a data communication bus. The complexity of the IC can cause large volumes of data communication over the data communication bus, which manifests itself in high frequency switching behaviour on the bus. This switching behaviour can cause the (dis)charging of cross-coupling capacitances between neighbouring conductors of the bus, which has a detrimental impact on both the power consumption of the bus as well as on the propagation speed of the data over the bus conductors, which may cause data to be delayed to such an extent that it arrives outside a predefined time frame such as a clock cycle, causing the data to be lost. The magnitude of this problem increases exponentially with a reduction in distance between neighbouring bus conductors, and will therefore become even more relevant in future IC designs.
Various measures have already been disclosed to alleviate this problem, for instance measures in which the switching activity on the bus is reduced, such as bus invert encoding, or measures in which the number of required bus conductors is reduced, such as pulse width modulation (PWM) encoding, in which a multi-bit data value is encoded by a predefined pulse width on a single conductor. An example of such a technique is disclosed in US patent US 6,020,834, in which a multi-bit data value is encoded by a predefined delay between two successive edges of a pulse on the bus conductor.
However, a drawback of such a method is that for data values having a large number of bits, a large number of unique delays is required to be able to communicate every possible data value over the data communication bus. For instance, for a 16-bit data value, $2^{16}$ unique delays are required, which has a detrimental impact on the data communication speed. Hence, PWM is not particularly suitable for the efficient communication of large multi-bit data values. The efficiency may be improved by dividing a large multi-bit data value, e.g. a 16-bit value, into smaller portions, e.g. four portions of four bits, which are communicated in parallel over four different bus conductors. However, this increases the switching activity on the bus to eight signal transitions per sampling period in the given example, i.e. four pulses each having two edges, excluding the signal transitions of the synchronization signal such as a clock signal.
US 2004/0161051 A1 discloses a method and apparatus to improve modulation efficiency. A symbol is created in which the relative position of a second pulse is a symbol period encode at least one bit. The symbol is transmitted across a communication channel. The one or more bits modulated by the position of the second pulse are recovered such that high bit rate communication may occur without channel compensation.
US 2003/0016056 A1 discloses the expression of a logical value by an order that transition edges appear in a plurality of transmission signals transmitting respectively on a plurality of signal lines. Otherwise, the logical value is expressed by a time difference between the transition edge of the transmission signal transmitting on the signal line and a transition edge of a standard timing signal.
The present invention seeks to provide a method, data transmission device, data reception device and system of the opening paragraph that facilitate a more efficient way of communicating multi-bit data over a limited number of bus conductors.
According to a first aspect of the present invention, there is provided a method for communicating data over a data communication bus comprising a first conductor and a set of further conductors, the method comprising providing the first conductor with a first signal transition for signalling the start of a first data communication period; and providing a further conductor, after a predefined delay with respect to the provision of the first signal transition, with a delayed signal transition, the predefined delay defining a first data value, and being characterized in that the first signal transition is an edge of a pulse having a predefined pulse width, said pulse width defining a second data value, the method further comprising providing the first conductor with the pulse; receiving the pulse from the first conductor; determining the width of the received pulse; and determining the second data value from the measured pulse width.

Because the method of the present invention only requires a single signal transition per bus conductor, the required switching activity of the method of the present invention is reduced compared to PWM encoding, especially when a plurality of further conductors in parallel are used for communicating parts of a data value in parallel. Since the first conductor can be used for both synchronisation as well as data communication, this facilitates a reduction of the total number of required bus conductors.

The method may further comprise receiving the first signal transition from the first conductor; receiving the delayed signal transition from the further conductor; determining the delay between the first signal transition and the delayed signal transition; and determining the first data value from the determined delay to decode the one or more data values that have been provided to the data communication bus.

The method may further comprise providing the first conductor with a second signal transition for signalling the start of further data communication period; providing the further conductor with a further delayed signal transition, after a further predefined delay with respect to the provision of the second signal transition, the further predefined delay defining a third data value; receiving the second signal transition from the first conductor; receiving the further delayed signal transition from the further conductor; determining a further delay between the second signal transition and the further delayed signal transition; and determining the third data value from the determined further delay. This facilitates a further reduction of a signal transition: the further delayed signal transition may only be provided if the third data value differs from the first data value, wherein determining the third data value from the measured further delay comprises assigning the first data value to the third data value of no further delayed signal transition is received.

According to a further aspect of the invention, there is provided a data transmission device, comprising a first signal generator being arranged to provide a first signal transition for signalling the initiation of a first data communication period, the first signal generator having a first output for coupling to a first conductor of a data communication bus, and being responsive to an external signal; and a set of further signal generators responsive to the first signal generator, each further signal generator being arranged to provide, after a predefined delay respective to the provision of the first signal transition, a delayed signal transition from a plurality of delayed signal transitions, each delayed signal transition defining a respective data value from a plurality of data values; each further signal generator having a set of inputs for receiving a data value from the plurality of data values; and a set of further outputs for providing respective further conductors from a set of further conductors of the data communication bus with respective delayed signal transitions, characterized in that the first signal generator may be arranged to provide a pulse having a predefined pulse width, said pulse width defining a second data value, to allow the transmission of data over the first conductor of the data communication bus.

Such a data transmission device facilitates data encoding and transmission in accordance with the method of the present invention. Such a data transmission device may for instance be in the form of (a part of) an IC, or in the form of (a part of) an IP block for integration in an IC design.

Preferably, the first signal generator is coupled to the set of further signal generators via a delay line, the delay line being arranged to provide the plurality of delayed signal transitions. This provides a robust and low-power way of generating the delayed transitions requiring little or no switching activity, in contrast to a clock-based delay generator, which, however, may also be used.

In an exemplary embodiment, each further signal generator comprises selection means for selecting a delayed signal transition from the plurality of delayed signal transitions in response to the data value received on the set of inputs; a comparator for providing an output signal based on a comparison of the last received data value to the previously received data value; and logic for forwarding the selected delayed signal transition to the output in response to the comparator output signal. This provides an area-efficient implementation of a further signal generator.

Preferably, the first signal generator comprises a delay element coupled to its output for introducing a delay in the output of the first signal transition, said delay matching the processing time of the delayed signal transition by at least a part of the further signal generator. This ensures accurate synchronisation between the signal transitions on the first conductor and the delayed signal transitions on the further conductors. The required delay of the delay element may be determined during the design of the data transmission device; alternatively, the delay element may be programmable to facilitate post-manufacturing delay matching.

According to another aspect of the present invention, there is provided a data reception device, comprising a first input for receiving a first signal transition from a first conductor of a data communication bus; a set of further inputs for receiving from a set of further conductors of the data communication bus after a predefined delay with respect to the reception of the first signal transition, respective delayed signal transitions from a plurality of delayed signal transitions, each delayed signal transition defining a respective data value from a plurality of data values; a signal generator coupled to the first input for generating, after a predefined delay with respect to the reception of the first signal transition, a plurality of delayed further signal transitions, each delayed further signal transitions defining a respective data value from the plurality of data values; decoding means coupled to the set of further inputs and the signal generator for decoding the respective delayed signal transitions into the corresponding data values based on the plurality of delayed further signal transitions; and a set of outputs for receiving the decoded data values from the decoding means, characterized in that the first signal transition is an edge of a pulse having a predefined pulse width, said pulse width defining a second data value, and in that the data reception device is further adapted to receive the pulse from the first conductor, determine the width of the received pulse and to determine the second data value from the measured pulse width.

Such data reception device facilitates data reception and decoding in accordance with the method of the present invention. Such data reception device may for instance be in the form of (a part of) an IC, or in the form of (a part of) an IP block for integration in an IC design.

The decoding means may comprise signal transition detection means for detecting the respective delayed signal transitions; a set of registers, each coupled to the signal generator for capturing a delayed further signal transition in response to the signal detection means; and a set of decoding logic blocks, each coupled between a register from the set of register and a respective output for providing the output with a data value from the range of values based on the delayed further signal transition captured by the register.

This provides an area efficient and scalable implementation, in which the transition detection means may be implemented as one or more edge detectors.

Preferably, the signal generator comprises a delay chain comprising a plurality of delay elements, each delay element comprising an output for generating a delayed further signal transition from the plurality of delayed further signal transitions. This facilitates a robust and low-power way of generating the delayed signal transitions, as previously explained.

The delay elements may comprise a plurality of shunt capacitors responsive to respective control signals to provide a programmable delay chain, which facilitates the matching of the delays of the delay chain to the delays generated by data transmission device at an opposite end of a data communication bus, to ensure correct interpretation of the received encoded signals. Moreover, additional delay introduced by the data communication bus may also be compensated for. Other implementations of a programmable delay chain are also feasible, but the shunt capacitor based implementation is preferred for reasons of power consumption and robustness. The shunt capacitors may have different widths, i.e. different capacitances, to facilitate a fine-grained tuning of the delay.

To this end, the data reception device may further comprise a calibration circuit for generating the set of control signals, the calibration circuit comprising a control block being arranged to receive the first signal transition, a delayed signal transition and a corresponding delayed further signal transition, the control block being responsive to a calibration signal; a control signal generator for providing the respective control signals, the control signal generator being responsive to the calibration signal; a first register coupled to control signal generator for receiving a first set of control signals; a second register coupled to control signal generator for receiving a second set of control signals, the first and second register being responsive to the control block; and a mean value block coupled to the first register and the second register for determining mean value control signals from the first set of control signals and the second set of control signals, the mean value block having a set of outputs coupled to the plurality of shunt capacitors for providing the shunt capacitors with a mean value of the first and second set of control signals.

This facilitates a calibration of the delay chain by finding the outer boundaries of a window in which a delayed signal transition from a selected delay element of the delay chain is correctly interpreted, and selecting a delay setting for the delay chain elements in the middle of this window, thus providing maximum tolerances for variations in the delay of signal transitions such as variations introduced by cross-coupling interferences between neighbouring bus conductors.

According to a further aspect of the invention, there is provided a system comprising a data transmission device and a data reception device of the present invention, and a data communication bus comprising a first conductor coupled between the first output of the data transmission device and the first input of the data reception device; and a set of further conductors coupled between the set of further outputs of the data transmission device and the set of further inputs of the data reception device.

Such a system implements the method of the present invention, and benefits from the same advantages as mentioned for said method. The system may be a system-on-chip, with the data transmission device and the data reception device located on the same IC. Alternatively, the system may include a multitude of ICs, with the data transmission device and the data reception device residing on different integrated circuits, and wherein the data communication bus is at least partly located on a carrier of the different integrated circuits. The system typically is a (part of a) data processing system for processing binary data, such as a digital electronic device, e.g. a computer, an audio signal processing device, video signal processing device, mobile communications device and so on.

The invention is described in more detail and by way of non-limiting examples with reference to the accompanying drawings, wherein:

Fig.1 depicts a flowchart of an embodiment of the method of the present invention;
Fig.2a depicts a timing diagram of signal transitions according to an embodiment of the method of the present invention;
Fig.2b depicts another timing diagram of signal transitions according to another embodiment of the method of the present invention;
Fig.3 depicts an embodiment of a system of the present invention;
Fig.4 shows an embodiment of a data transmission device of the present invention;
Fig.5 shows a detail of an embodiment of a data reception device of the present invention;
Fig.6 shows another detail of an embodiment of a data reception device of the present invention;
Fig.7 schematically depicts the capacitances present in an nMOS device;
Fig.8 shows a graph depicting a programmable delay; and
Fig.9 shows yet another detail of an embodiment of a data reception device of the present invention.

It should be understood that the Figures are merely schematic and are not drawn to scale. It should also be understood that the same reference numerals are used throughout the Figures to indicate the same or similar parts.

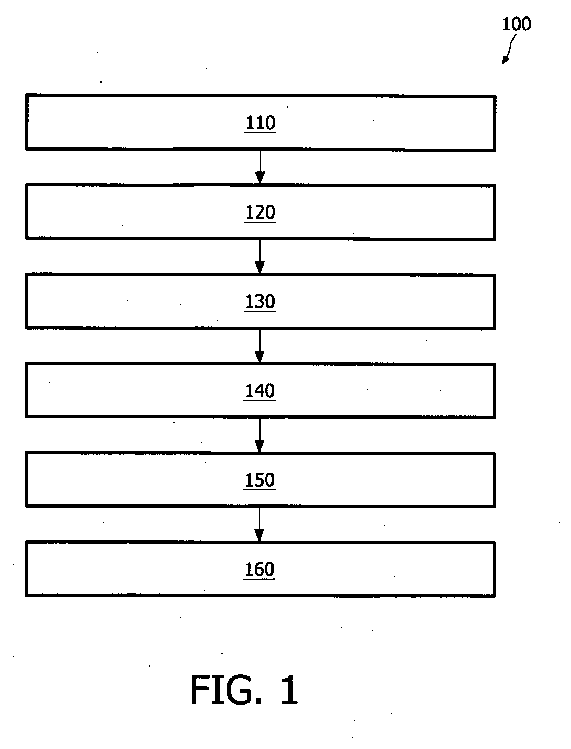

Fig.1 is a flowchart of a method 100 of the present invention for communicating data over a data communication bus. In a first step 110, a first conductor of the bus is provided with a first signal transition for signalling the start of a first data communication period. This first signal transition typically is an edge of a signal pulse, and serves as a start signal for the data communication. The first data communication period may be a clock cycle, or a period initiated by an asynchronous data communication request, e.g. a handshake signal.

Next, in step 120, a further conductor of the bus is provided with a further signal transition that is delayed with respect to the first signal transition. This delay is one of a number of predefined delays that define the various data values in a range of data values to be communicated over the bus. The bus may have an integer number N of further conductors that each transmit such a delayed signal transition, thus facilitating the transmission of N different data values per provided first signal transition over a total of N+1 conductors.

Alternatively, the first conductor of the bus may also be used to communicate a data value, by confining the signal pulse of which the first signal transition is a part to the first data communication period and giving the pulse a predefined pulse width that can be interpreted as another data value from the aforementioned range of data values. This is a known implementation of PWM encoding, such as disclosed in US 6,020,834, and does not need to be further discussed for this reason.

Next, in step 130, the first signal transition is received from the first conductor on the receiver end of the bus, which signals the start of the reception of encoded data values on the N further conductors, and if the first signal transition is part of a PWM encoded pulse, of the reception of an encoded data value of the first conductor. Subsequently, in step 140, the various delayed signal transitions are received from the N further conductors, and in step 150, the delay between the received first signal transition and the received delayed signal transitions is determined, and the respective data values as encoded by the delayed signal transitions are determined from the determined respective delays in step 160. These steps may be repeated in further data communication periods.

A further reduction in required signal transitions for communicating data over the data communication bus can be achieved by not providing a signal transition to a further conductor in a subsequent data communication period if the data value to be communicated in that period is identical to the previously communicated data value. Thus, the receiving end of the data communication bus will reassign the previously decoded data value to the subsequent data communication period in step 160 if no delayed signal transition is received in that period.

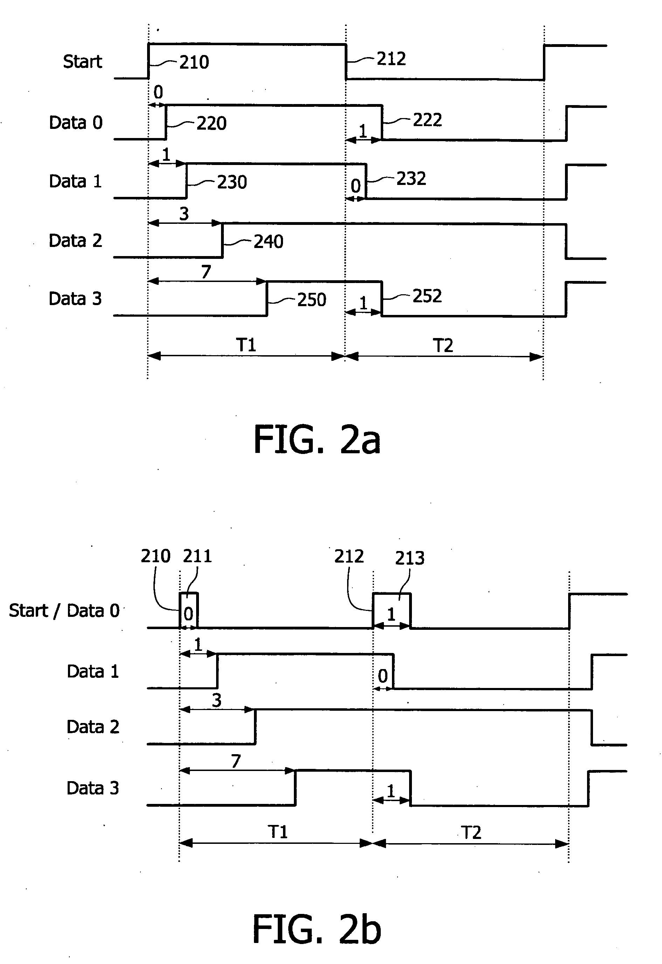

Fig.2a depicts a timing diagram of an example of the data communication method of the present invention over a bus having a first conductor labelled 'Start', and four further conductors labelled 'Data 0', 'Data 1', 'Data 2' and 'Data 3' respectively. In the first data communication period T1, a first signal transition 210, e.g. an edge of a pulse, is provided to the 'Start' conductor. The further conductor 'Data 0' is provided with a signal transition 220 that is delayed with respect to the first signal transition 210. The amount of delay encodes a numeric data value '0'. The further conductor 'Data 1' is provided with a signal transition 230 that is also delayed with respect to the first signal transition 210. This amount of delay encodes a numeric data value '1'. The further conductor 'Data 2' is provided with a signal transition 240 that is also delayed with respect to the first signal transition 210. This amount of delay encodes a numeric data value '3'. Finally, the further conductor 'Data 3' is provided with a signal transition 250 that is also delayed with respect to the first signal transition 210. This amount of delay encodes a numeric data value '7'.

It will be obvious that the encoded data values are presented as numeric values by way of non-limiting example only and that binary representations of the data values are equally feasible.

In the second data communication period T2, the 'Start' conductor is provided with signal transition 212, which in Fig.2a is a trailing edge of a pulse of which first signal transition 210 is the leading edge. This pulse may be part of a regular pulse train, e.g. a clock signal. The further conductor 'Data 0' is provided with a signal transition 222 that is delayed with respect to the signal transition 212, the delay encoding the data value '1'. The further conductor 'Data 1' is provided with a signal transition 232 that is delayed with respect to the signal transition 212, the delay encoding the data value '0', and the further conductor 'Data 3' is provided with a signal transition 252 that is also delayed with respect to the signal transition 212, the delay encoding the data value '1'.

The further conductor 'Data 2' is not provided with a signal transition in T2. The receiving end of this conductor will interpret the absence of a signal transition as communication of the same data value, as communicated in the previous data communication period, i.e. data value '3' communicated in T1.

In Fig.2b, the first conductor 'Start' is not only used to signal the initialization of a data communication period, but is also used to communicate data over the data communication bus. The signal transitions 210 and 212 that signal the start of the respective data communication periods T1 and T2 now belong to different pulses, i.e. pulse 211 and pulse 213 respectively, with each pulse having a pulse width that is smaller than the data communication period. The respective pulse widths of pulses 211 and 213 correspond to encoded data values, i.e. value '0' and '1' respectively, in analogy with PWM encoding. This obviates the need for a conductor dedicated to the provision of data communication initialization signals only.

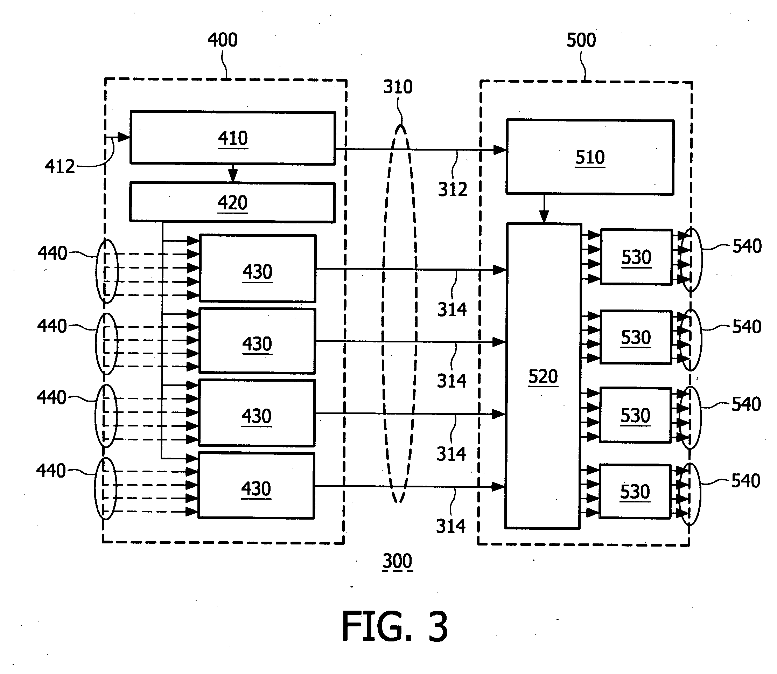

Fig.3 schematically depicts a system 300 of the present invention. The system 100 has a data transmission device 400 and a data reception device 500 coupled to a data communication bus 320, which has a first conductor 312 and a set of further conductors 314. In the context of the present invention, a set is intended to contain one or more members. The bus 310 may be implemented using known techniques. For instance, neighbouring conductors of the bus 310 may have delay elements on opposite ends (i.e. the transmission end and the reception end) of the bus to avoid simultaneous switching at two neighbouring conductors while in the mean time ensuring that the amount of delay experienced on each conductor is more or less identical, and the conductors may comprise a number of drivers to ensure that an appropriate signal integrity is maintained.

The data transmission device 400 has a module 410 for generating the initialization signal transitions on the conductor 312, i.e. signal transitions 210 and 212. The module 410 is responsive to a data communication request signal provided on its input 412. This may be a clock signal in case of continuous data transfer over the data communication bus 310. An output of the module 410 is coupled to a delay generator 420, e.g. a delay chain, for generating a set of delayed signal transitions, each signal transition corresponding to a different encoded data value from the range of data values that may be communicated over the bus 310, such that the set of delayed signal transitions covers each value in the data value range.

The delay generator 420 is coupled to a number of encoders 430, each encoder 430 being responsive to the module 410, and being coupled between a further conductor 314 and an integer number M of inputs 440 for receiving an M-bit data value. Each encoder 430 is configured to select one of the delayed signal transitions from the delay generator 420 based on the received M-bit input, and to output the delayed signal transition onto its further conductor 314.

The data reception device 500 has a delay generator 510 coupled to the first conductor 312. The delay generator 510 is arranged to generate the set of delayed signal transitions, similar to delay generator 420 from a signal transition received from the first conductor 312. The delayed signal transitions are forwarded to a decoder 520. The decoder 520 is arranged to decode each delayed signal transition received from the further conductors 314 based on a comparison or matching of the delayed signal transition received from a further conductor 314 and the set of delayed signal transitions received from the delay generator 510. The decoder 520 is further arranged to output the decoded M-bit values either directly to respective outputs 540 or to optional registers 530, in case the respective outputs 540 should receive the decoded data values in a synchronized fashion. The decoder 520 may comprise a number of subunits (not shown), each configured to decode the encoded data value received from a subset of further conductor, e.g. from a single further conductor.

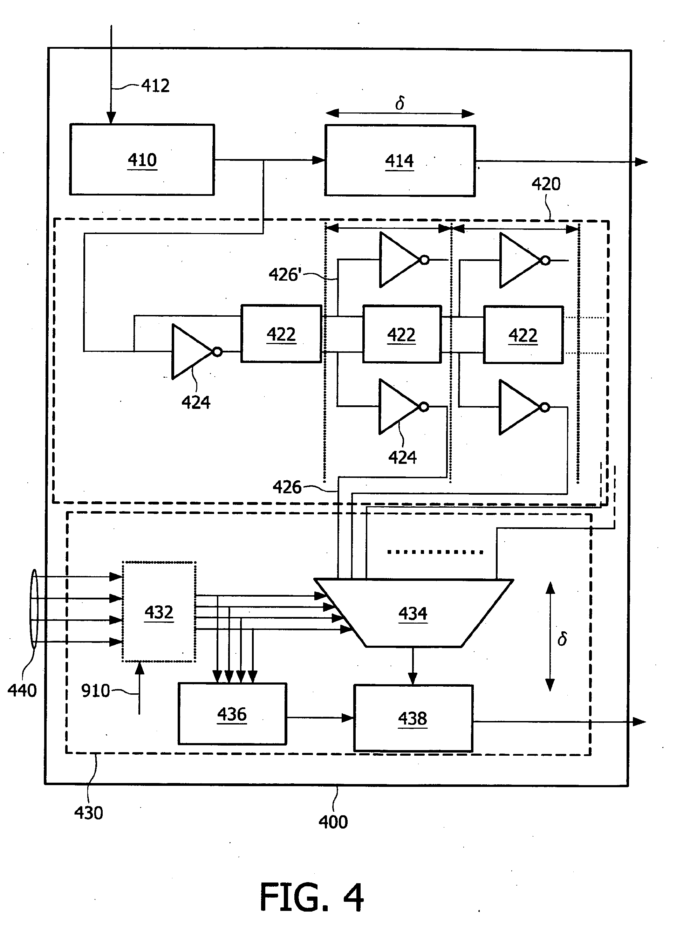

Fig. 4 shows an embodiment of the data transmission device 400 in greater detail. The module 410 comprises a flip-flop triggered by a clock signal 412 for generating the first signal transition. The module 410 has an output for providing a first conductor of a data communication bus with the first signal transition; this output may comprise a delay element 414 to match a processing delay δ introduced in another part of the data transmission device 400 (*vide infra*). The module 410 is also coupled to the delay generator 420, which is implemented as a delay chain having a plurality of delay elements 422. Each delay element is arranged to generate a delayed signal transition that corresponds to one of the data values from the range of data values that can be encoded by the data transmission device 400. Each delay element 422 has a number of outputs 426 to provide a corresponding number of encoders 430 with its delayed signal transition.

The delay elements 422 may be implemented using known implementations of such elements. A suitable implementation can be achieved by the use of differential cascade voltage switch logic gates, because such gates provide a robust and low-power implementation. It is known that for such gates the falling edge is faster than the rising edge; this may be compensated by implementing each delay element 422 in duplo, with one element being the logic complement of the other. This is shown in Fig. 4 by the two inputs to the first delay element 422, with one input including an inverter 424 to provide the logic complement of the other input. This is by way of example only; other delay clement implementations that for instance receive a single input are equally feasible. The outputs 426 of the delay elements 422 may comprise a load element such as an inverter 424 to stabilize the load on the outputs 426.

The outputs 426 are provided to an encoder 430, which is arranged to receive an n-bit data value, e.g. a data word, via its inputs 440 and to encode this n-bit data value into a predefined delayed signal transition. To this end, the encoder 430 comprises an input logic block 432 coupled between the inputs 440 and the control terminal of a multiplexer (MUX) 434. The signal inputs of the MUX 434 are the various outputs 426 of the delay elements 422 such that each encoded data value from the range of data values can be selected. The input logic block 432 is configured to select the appropriate input of the MUX 432 in response to a data value received via the inputs 440. The input logic block is also responsive to a calibration signal 910 for calibrating the data communication over a system 300. This will be explained in more detail later.

The output of the MUX 434 is coupled to an output (not shown) of the data communication device 400 to facilitate the provision of a selected delayed signal transition to a further conductor of a data communication bus. It is possible that the MUX 432 introduces a delay $\delta$ into the forwarding of a delayed signal transition from a delay element output 426 to its own output. This delay should be matched in the generation of the first signal transition by module 410, for instance by the optional delay element 414. The delay may be determined during the design of the data transmission device 400. Alternatively, the delay element 414 may be programmable to facilitate the determination of $\delta$ after manufacturing.

The encoder 430 may comprise a comparator 436 coupled to the outputs of the input logic block 432 for comparing a data value received in the previous data transmission period with the data value received in the current data value, to prevent the MUX 434 from forwarding a delayed signal transition to the output of the data transmission device 400 in case the compared data values are the same. To this end, bypass logic 438 under control of the comparator 436 is placed between the output of the MUX 434 and the output of the data communication device 400.

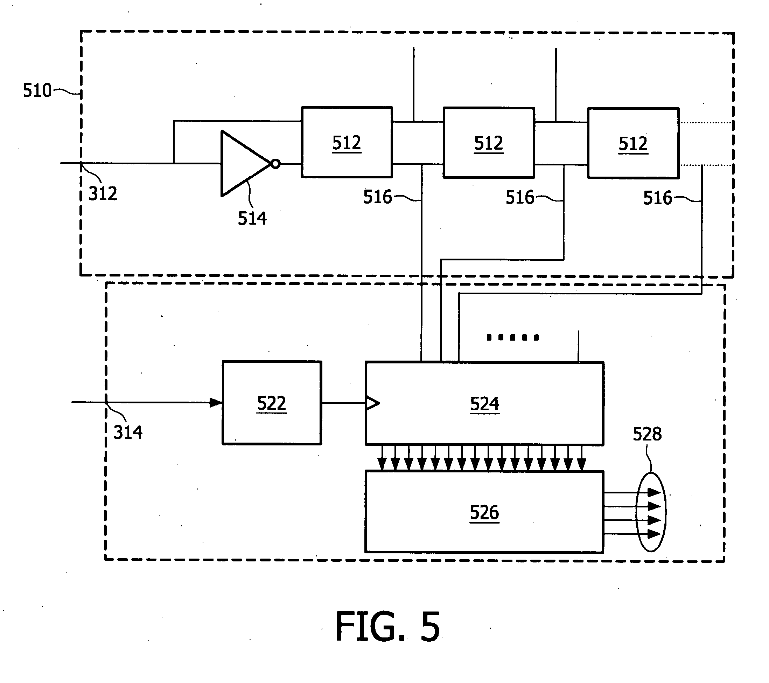

Fig. 5 shows an embodiment of a data reception device 500 of the present invention. A delay chain 510 is arranged to receive a first signal transition from a first conductor 314 of a data communication bus 310. The delay chain has a number of delay elements 514 each arranged to generate a delayed signal transition that corresponds to one of the data values from the range of data values as encoded by a data transmission device 400, and to provide these delayed signal transitions to their outputs 516.

The data reception device 500 further comprises a decoder 520, which includes a signal transition detector 522, e.g. a pulse edge detector, for detecting a delayed signal transition from a further conductor 314 of the data communication bus 310. The detector 522 has an output coupled to a register 524 for capturing the delayed signal transitions from outputs 516. The register 524 is coupled to decoding logic 526, which is arranged to decode the delayed signal transitions captured by the register 524 into to the n-bit data value received by the data transmission device 400 on its corresponding inputs 440. The decoded data value is provided either directly to the corresponding outputs 540 of the data reception device 500 or to the corresponding register 530, as previously explained.

At this point, it is emphasized that a data communication device 400 and a data reception device 500 may also be a part of an IC module to facilitate two-way encoded communication between the IC module and an external device, e.g. another IC module of a SoC or another IC on a printed circuit board.

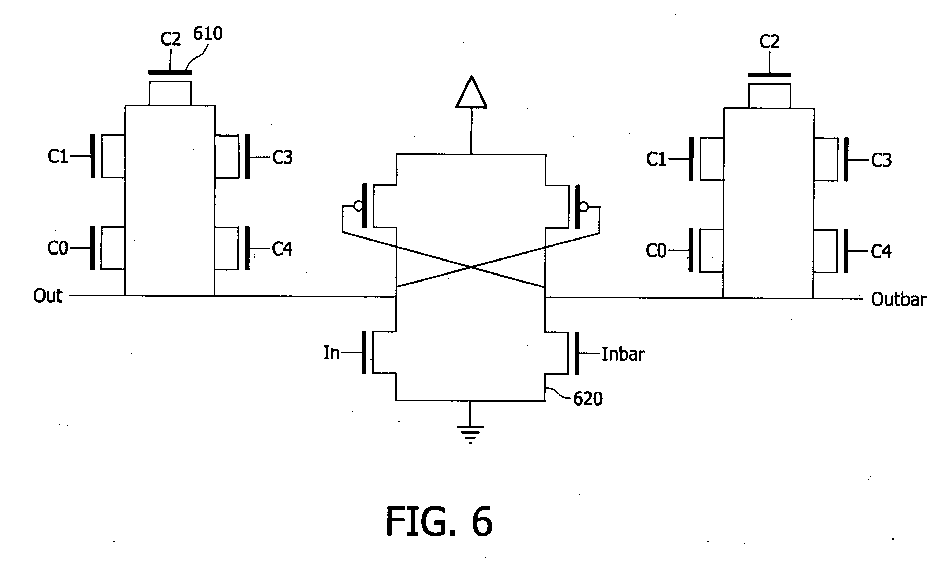

Fig. 6 shows a preferred embodiment of a part of a delay element 512 in more detail. A differential cascade voltage logic switch block 620 has its input (In) and complementary input (Inbar) coupled to an input (not shown) for receiving the first signal transition from first conductor 312, and has its output (Out) and complementary output (Outbar) coupled to a respective set of shunt capacitors 610. Each shunt capacitor 610 is controlled by one of the control signals C0-C4. The shunt capacitors 610 have different widths to facilitate the programming of different delays by the control signals C0-C4. It will be appreciated that the choice of ten shunt capacitors 610 controlled by five different control signals is by way of non-limiting example only; other numbers of shunt capacitors 610 controlled by other numbers of control signals are equally feasible.

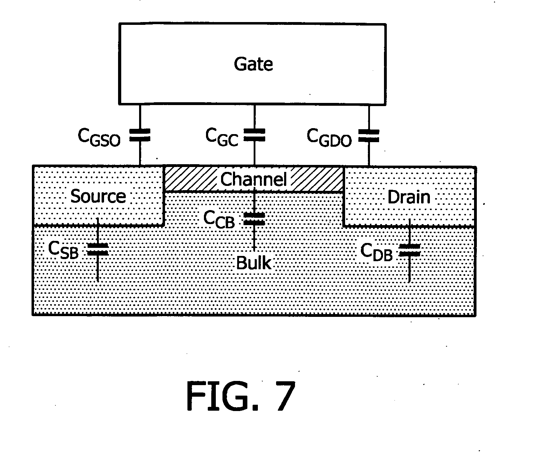

The principle of how the capacitance of a transistor-implemented shunt capacitor 610 can be tuned is explained with the aid of Fig. 7. The total drain-source capacitance is dependent on the operation mode of the transistor. For the sake of simplicity, the reasoning in this section will only be presented for an NMOS transistor. When the transistor is operating in the cut-off region, the capacitances $C_{GC}$ and $C_{CB}$ will not be present, and the only capacitances are the overlap capacitances from drain and source to gate ($C_{GDO}$ and $C_{GSO}$ respectively) and the bulk capacitances ($C_{SB}$, and $C_{DB}$). If the transistor operates in resistive or saturation mode, however, the capacitances between the channel and gate ($C_{GC}$) and the channel and bulk ($C_{CB}$) appear. The various operation modes of the transistor exhibit the following respective capacitances:

$$C_{Cut-off} = C_{GSO} + C_{GDO} + C_{SB} + C_{DB}$$

$$C_{Linear} = C_{GSO} + C_{GDO} + C_{SB} + C_{DB} + (C_{GC} + C_{CB})$$

$$C_{Saturation} = C_{GSO} + C_{GDO} + C_{SB} + C_{DB} + 2/3(C_{GC} + C_{CB}),$$

with $C_{cut-off}$ being the total cut-off capacitance, $C_{linear}$ being the total linear capacitance and $C_{saturation}$ being the total saturation capacitance.

If both drain and source are connected to the same net, controlling which region the transistor operates in can be used to vary the capacitance and thereby also the delay of that net. Since $V_{DS} = 0$, this can be done by simply changing the gate potential. When a high (1.2V) voltage is applied on the gate, the capacitance increases, and when a low voltage (0V) is applied, the capacitance decreases. This is an easy way to fine-tune the delay in a circuit. Since source and drain are connected, the transistor will always be in either the cut-off or linear region.

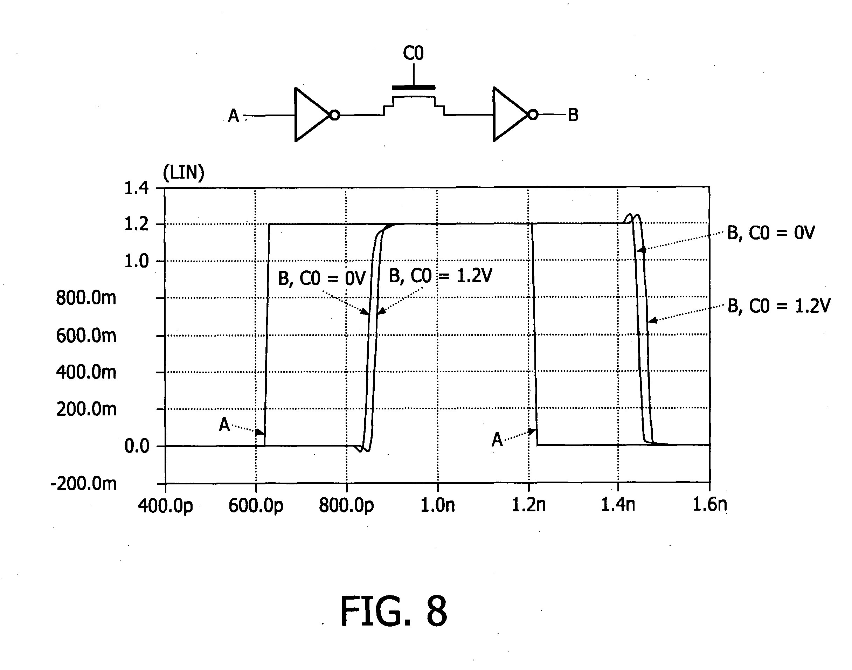

The programmability of the delay of a shunt capacitor 610 is shown in Fig. 8. For a shunt capacitor 610 having an input A, an output B and a control terminal C0, it is demonstrated that the application of a higher voltage (1.2V) on the control terminal C0 increases the delay of the shunt capacitor 610 with respect to the application of a lower voltage (0V) on the control terminal C0. Hence, the delay of a delay element 512 can be selected by providing the appropriate shunt capacitors 610 with the appropriate selection signals. The difference in delay is capacitance dependent; a larger capacitance, i.e. a larger shunt capacitor, facilitates larger differences in delay.

At this point, it is emphasized that other implementations of a delay elements 512 are also feasible; in fact, any known implementation of such a delay element may be used, although care has to be taken that an acceptable accuracy and signal integrity is achieved. For this reason, the shunt-capacitor based implementation is preferred, since this implementation provides these requirements without the need for considerable design efforts.

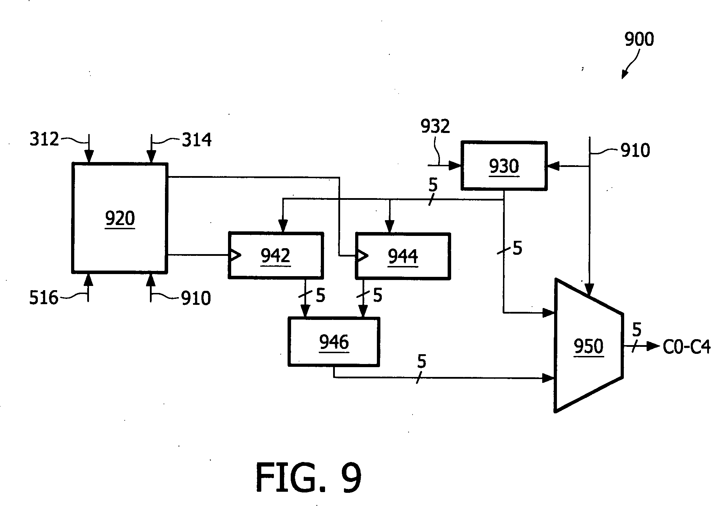

Fig. 9 shows an embodiment of a calibration circuit 900 for generating the control signals C0-C4. The calibration circuit 900 has a control block 920 that is responsive to an external calibration signal 910, which may be generated by a calibration controller (not shown) of the system 300, for instance at system start-up. The control block 920 is arranged to receive a signal transition from the first conductor 312 and a delayed signal transition from a preselected further conductor 314 of the data communication bus 310, as well as the delayed signal transition from the output 516 of a delay element 512 that is arranged to generate the delayed signal transition that corresponds to the delayed signal transition from the preselected further conductor 314. A signal generator 930, which may be implemented as a counter, is also responsive to the calibration signal 910, and may be reset by a reset signal 932, which may also be provided by the calibration controller.

The calibration circuit 910 further comprises a first register 942 and a second register 944 under control of the control block 920. The first register 942 and the second register 944 have their inputs coupled to the signal generator 930 and have their outputs coupled to a mean value generator 946, which is arranged to calculate the average of the values stored in these registers. The values stored in these registers are control signal values for controlling the shunt capacitors 610 as previously explained. A MUX 950 under control of the calibration signal 910 is arranged to receive a first set of control signal values from the signal generator 930 and a second set of control signal values from the mean value generator 946, and is arranged to provide the shunt capacitors 610 with one of these sets of values.

The calibration circuit 900 operates in a following manner. In calibration mode, the data transmission device 400, which is responsive to the calibration signal 910, will be forced to repeatedly transmit a first signal transition over the first conductor 312 and a preselected encoded data value, for instance an encoded decimal value '14', over the further conductor 314 that is coupled to the control block 920. Simultaneously, the control signal generator 930 will step through all possible control signal settings to vary the delay of the delay elements 512 by varying the capacitances of shunt capacitors 610, as previously explained. The MUX 950 is arranged to select the control values from the control signal generator 930 when the calibration signal 910 is active, which means that the shunt capacitors 610 are subjected to the varying control signals from the control signal generator 930.

The control block 920 compares the delayed signal transition from the output 516 with the signal transition from the further conductor 314. The first time that the control block 920 evaluates these transitions as belonging to the same encoded data value, the first register 942 is triggered to sample the actual control signal values from the control signal generator 930. Subsequently, the second register 944 samples the actual control values signal of the control signal generator 930 as long as the control block 920 decides that the data values received from the further conductor 314 and the delay element output 516 are identical. Consequently, the first register 342 and the second register 344 contain the boundaries of an interval, corresponding to a minimum delay value and a maximum delay value generated by the delay element 512, in which the control values of the control signal generator 930 cause the generation of a delay that leads to the correct decoding of the delayed signal transition received on the further conductor 314.

The mean of these two control signal values, labelled R1 and R2, is calculated by a (R1+R2)/2 operation that is implemented by the mean value generator 946. Upon completion of the calibration, the calibration signal 910 is deactivated, and the MUX 950 will output the control signal values from the mean value generator 946 to the shunt capacitors 610 of the delay line 510. Because these control signal values lie in the middle of the aforementioned interval, they ensure that the operation of the data reception device 500 is insensitive to delay variations in the delayed signal transitions, as long as these variations do not exceed half the delay period of the interval obtained in calibration mode. The calibration circuit 900 may be a part of the data reception device 500, or may be placed external thereto in a system 300.

It should be noted that the above-mentioned embodiments illustrate rather than limit the invention, and that those skilled in the art will be able to design many alternative embodiments without departing from the scope of the appended claims.

**Claims**

1.  A method (100) for communicating data over a data communication bus (310) comprising a first conductor (312) and a set of further conductors (314), comprising:

    providing the first conductor (312) with a first signal transition (210) for signalling the start of a first data communication period (T1); and
    providing a further conductor (314), after a predefined delay with respect to the provision of the first signal transition (210), with a delayed signal transition (220), the predefined delay defining a first data value,
    **characterized in that**:
    the first signal transition (210) is an edge of a pulse (211) having a predefined pulse width, said pulse width defining a second data value, the method further comprising:
    providing the first conductor (312) with the pulse (211);
    receiving the pulse (211) from the first conductor (312);
    determining the width of the received pulse (211); and determining the second data value from the measured pulse width.

2.  A method as claimed in claim 1, further comprising:

    receiving the first signal transition (210) from the first conductor (312);
    receiving the delayed signal transition (220) from the further conductor (314);
    determining the delay between the first signal transition (310) and the delayed signal transition (320); and
    determining the first data value from the determined delay.

3.  A method as claimed in claim 1 or 2, comprising:

    providing the first conductor (312) with a second signal transition (212) for signalling the start of further data communication period (T2);
    providing the further conductor (314) with a further delayed signal transition (222), after a further predefined delay with respect to the provision of the second signal transition (212), the further predefined delay defining a third data value;
    receiving the second signal transition (212) from the first conductor (312);
    receiving the further delayed signal transition (222) from the further conductor (314);
    determining a further delay between the second signal transition (212) and the further delayed signal transition (222); and
    determining the third data value from the measured further delay.

4.  A method as claimed in claim 3, wherein said further delayed signal transition (222) is provided if the third data value differs from the first data value, and wherein determining the third data value from the determined further delay comprises assigning the first data value to the third data value if no further delayed signal transition is received.

5.  Data transmission device (400), comprising:

    a first signal generator (410) being arranged to provide a first signal transition (210) for signalling the initiation of a first data communication period (T1), the first signal generator (410) having a first output for coupling to a first conductor (312) of a data communication bus (310), and being responsive to an external signal (412); and
    a set of further signal generators (430) responsive to the first signal generator (410), each further signal generator (430) being arranged to provide, after a predefined delay respective to the provision of the first signal transition (210), a delayed signal transition (220, 230, 240, 250) from a plurality of delayed signal transitions (220; 230; 240; 250), each delayed signal transition (220, 230, 240, 250) defining a respective data value from a plurality of data values; each further signal generator (430) having:

a set of inputs (440) for receiving a data value from the plurality of data values; and

a set of further outputs for providing respective further conductors (314) from a set of further conductors of the data communication bus (310) with respective delayed signal transitions (220, 230, 240, 250),

**characterized in that**:

the first signal generator (410) is arranged to provide a pulse (211) having a predefined pulse width, said pulse width defining a second data value.

6. Data transmission device (400) as claimed in claim 5, wherein the first signal generator (410) is coupled to the set of further signal generators (430) via a delay line (420), the delay line (420) being arranged to provide the plurality of delayed signal transitions (220; 230; 240; 250).

7. Data transmission device (400) as claimed in claim 5 or 6, wherein each further signal generator (430) comprises:

selection means (432, 434) for selecting a delayed signal transition (220, 230, 240, 250) from the plurality of delayed signal transitions (220; 230; 240; 250) in response to the data value received on the set of inputs (440);

a comparator (436) for providing an output signal based on a comparison of the last received data value to the previously received data value; and

logic (438) for forwarding the selected delayed signal transition (220, 230, 240, 250) to the output in response to the comparator output signal.

8. Data transmission device (400) as claimed in claim 7, wherein the first signal generator (410) comprises a delay element (414) coupled to its output for introducing a delay in the output of the first signal transition (210), said delay matching the processing time of the delayed signal transition by at least a part of the further signal generator (430).

9. A data reception device (500), comprising:

a first input for receiving a first signal transition (210) from a first conductor (312) of a data communication bus (310);

a set of further inputs for receiving, from a set of further conductors (314) of the data communication bus (310) after a predefined delay with respect to the reception of the first signal transition (210), respective delayed signal transitions (220, 230, 240, 250) from a plurality of delayed signal transitions (220; 230; 240; 250), each delayed signal transition (220, 230, 240, 250) defining a respective data value from a plurality of data values;

a signal generator (510) coupled to the first input for generating, after a predefined delay with respect to the reception of the first signal transition, a plurality of delayed further signal transitions, each delayed further signal transitions defining a respective data value from the plurality of data values;

decoding means (520) coupled to the set of further inputs and the signal generator (510) for decoding the respective delayed signal transitions (220, 230, 240, 250) into the corresponding data values based on the plurality of delayed further signal transitions; and

a set of outputs (540) for receiving the decoded data values from the decoding means (520),

**characterized in that** the first signal transition (210) is an edge of a pulse (211) having a predefined pulse width, said pulse width defining a second data value, and **in that** the data reception device is further adapted to receive the pulse (211) from the first conductor (312), determine the width of the received pulse and to determine the second data value from the measured pulse width.

10. A data reception device (500) as claimed in claim 9, wherein the decoding means (520) comprise:

signal transition detection means (522) for detecting the respective delayed signal transitions;

a set of registers (524), each coupled to the signal generator (510) for capturing a delayed further signal transition in response to the signal detection means (522); and

a set of decoding logic blocks (526), each coupled between a register from the set of registers (524) and a respective output (540) for providing the output

with a data value from the range of values based on the delayed further signal transition captured by the register (524).

11. Data reception device (500) as claimed in claim 9 or 10, wherein the signal generator (510) comprises a delay chain comprising a plurality of delay elements (512), each delay element (512) comprising an output for generating a delayed further signal transition from the plurality of delayed further signal transitions.

12. Data reception device as claimed in claim 11, wherein each delay element (512) is programmable by a set of control signals (C0-C4).

13. Data reception device as claimed in claim 12, wherein each delay element (512) comprises a plurality of shunt capacitors (610), each shunt capacitor (610) being responsive to a control signal-(C0, C1, C2, C3, C4) from the set of control signals (C0-C4).

14. Data reception device (500) as claimed in claim 13, wherein each shunt capacitor (610) has a different capacitance.

15. Data reception device (500) as claimed in claim 12, 13 or 14, further comprising a calibration circuit (900) for generating the set of control signals C0-C4), the calibration circuit (900) comprising:

a control block (920) being arranged to receive the first signal transition (210), a delayed signal transition (220) and a corresponding delayed further signal transition, the control block being responsive to a calibration signal (910);
a control signal generator (930) for providing the respective control signals (C0-C4), the control signal generator (930) being responsive to the calibration signal (910);
a first register (942) coupled to control signal generator (930) for receiving a first set of control signals (C0-C4);
a second register (944) coupled to control signal generator (930) for receiving a second set of control signals (C0-C4), the first and second register being responsive to the control block (920);
a mean value block (946) coupled to the first register (944) and the second register (946) for determining mean value control signals from the first set of control signals and the second set of control signals, the mean value block (946) having a set of outputs coupled to the plurality of shunt capacitors (610) for providing the shunt capacitors (610) with a mean value of the first and second set of control signals.

16. A system (300) comprising:

a data transmission device (400) as claimed in any of the claims 5-8;
a data reception device (500) as claimed in any of the claims 9-15; and
a data communication bus (310) comprising:
a first conductor (312) coupled between the first output of the data transmission device (400) and the first input of the data reception device (500); and
a set of further conductors (314) coupled between the set of further outputs of the data transmission device (400) and the set of further inputs of the data reception device (500).

17. A system (300) as claimed in claim 16, wherein the system (300) is located on a single integrated circuit.

18. A system (300) as claimed in claim 16, wherein the data transmission device (400) and the data reception device (500) reside on different integrated circuits, and wherein the data communication bus (310) is at least partly located on a carrier of the different integrated circuits.

19. Integrated circuit module for communicating data over a data communication bus (310) in accordance with the method as claimed in claim 1-4, the integrated circuit module comprising:

data transmission device (400) as claimed in any of the claims 5-8 for transmitting data to said bus (310); and
data reception device (500) as claimed in any of the claims 9-14 for receiving data from said bus (310).

**Patentansprüche**

1. Verfahren (100) zum Kommunizieren von Daten über einen Datenkommunikationsbus (310), welcher einen ersten Leiter (312) und einen Satz von weiteren Leitern (314) umfasst, wobei das Verfahren aufweist:

dem ersten Leiter (312) Bereitstellen einer ersten Signalüberleitung (210) zum Signalisieren des Starts einer ersten Datenkommunikationsperiode (T1), und

einem weiteren Leiter (314) Bereitstellen, nach einer vordefinierten Verzögerung bezüglich zu der Bereitstellung der ersten Signalüberleitung (310), einer verzögerten Signalüberleitung (220), wobei die vordefinierte Verzögerung einen ersten Datenwert definiert,

**dadurch gekennzeichnet, dass**:

die erste Signalüberleitung (210) eine Kante eines Pulses (211) ist, welcher eine vordefinierte Pulsbreite hat, wobei die Pulsbreite einen zweiten Datenwert definiert, wobei das Verfahren ferner aufweist:

dem ersten Leiter (312) Bereitstellen des Pulses (211);

Empfangen des Pulses (211) von dem ersten Leiter (312);

Bestimmen der Breite des empfangenen Pulses (211); und

Bestimmen des zweiten Datenwertes von der gemessenen Pulsbreite.

2. Verfahren gemäß Anspruch 1, ferner aufweisend:

Empfangen der ersten Signalüberleitung (210) von dem ersten Leiter (312);

Empfangen der verzögerten Signalüberleitung (220) von dem weiteren Leiter (314);

Bestimmen der Verzögerung zwischen der ersten Signalüberleitung (310) und der verzögerten Signalüberleitung (320); und

Bestimmen des ersten Datenwerts von der bestimmten Verzögerung.

3. Verfahren gemäß Anspruch 1 oder 2, aufweisend:

dem ersten Leiter (312) Bereitstellen einer zweiten Signalüberleitung (212) zum Signalisieren des Starts einer weiteren Datenkommunikationsperiode (T2);

dem weiteren Leiter (314) Bereitstellen einer weiteren verzögerten Signalüberleitung (222), nach einer weiteren vordefinierten Verzögerung bezüglich der Bereitstellung der zweiten Signalüberleitung (212), wobei die weitere vordefinierte Verzögerung einen dritten Datenwert definiert;

Empfangen der zweiten Signalüberleitung (212) von dem ersten Leiter (312);

Empfangen der weiteren verzögerten Signalüberleitung (222) von dem weiteren Leiter (314);

Bestimmen einer weiteren Verzögerung zwischen der zweiten Signalüberleitung (212) und der weiteren verzögerten Signalüberleitung (222); und

Bestimmen des dritten Datenwertes von der gemessenen weiteren Verzögerung.

4. Verfahren gemäß Anspruch 3, wobei die weitere verzögerte Signalüberleitung (222) bereitgestellt ist, wenn sich der dritte Datenwert von dem ersten Datenwert unterscheidet, und wobei Bestimmen des dritten Datenwertes von der bestimmten weiteren Verzögerung Zuweisen des ersten Datenwertes zu dem dritten Datenwert aufweist, wenn keine weitere verzögerte Signalüberleitung empfangen wird.

5. Datenübertragungsgerät (400), aufweisend:

einen ersten Signalgenerator (410), welcher ausgebildet ist, eine erste Signalüberleitung (210) zum Signalisieren der Initiation einer ersten Datenkommunikationsperiode (T1) bereitzustellen, wobei der erste Signalgenerator (410) eine erste Ausgabe zum Koppeln an einen ersten Leiter (312) eines Datenkommunikationsbusses (310) hat und auf ein externes Signal (412) anspricht; und

einen Satz von weiteren Signalgeneratoren (430), welche auf den ersten Signalgenerator (410) ansprechen, wobei jeder weitere Signalgenerator (430) ausgebildet ist, nach einer vordefinierten Verzögerung bezüglich der Bereitstellung der ersten Signalüberleitung (210), eine verzögerte Signalüberleitung (220, 230, 240, 250) von einer Mehrzahl von verzögerten Signalüberleitungen (220; 230; 240; 250) bereitzustellen, wobei jede verzögerte Signalüberleitung (220, 230, 240, 250) einen entsprechenden Datenwert von einer Mehrzahl von Datenwerten definiert;

wobei jeder weitere Signalgenerator (430) hat:

einen Satz von Eingaben (440) zum Empfangen eines Datenwertes von der Mehrzahl von Datenwerten; und

einen Satz von weiteren Ausgaben, um entsprechenden weiteren Leitern (314) von einem Satz von weiteren Leitern des Datenkommunikationsbusses (310) jeweilige verzögerte Signalüberleitungen (220, 230, 240, 250) bereitzustellen,

**dadurch gekennzeichnet, dass**:

der erste Signalgenerator (410) ausgebildet ist, einen Puls (211), welcher eine vordefinierte Pulsbreite hat, bereitzustellen, wobei die Pulsbreite einen zweiten Datenwert definiert.

6. Datenübertragungsgerät (400) gemäß Anspruch 5, wobei der erste Signalgenerator (410) mit dem Satz von weiteren Signalgeneratoren (430) über eine Verzögerungsleitung (420) gekoppelt ist, wobei die Verzögerungsleitung (420) ausgebildet ist, die Mehrzahl von verzögerten Signalüberleitungen (220; 230; 240; 250) bereitzustellen.

7. Datenübertragungsgerät (400) gemäß Anspruch 5 oder 6, wobei jeder weitere Signalgenerator (430) aufweist:

   Auswahlmittel (432, 434) zum Auswählen einer verzögerten Signalüberleitung (220, 230, 240, 250) von der Mehrzahl von verzögerten Signalüberleitungen (220; 230; 240; 250) in Antwort auf den Datenwert, welcher an dem Satz von Eingaben (440) empfangen ist;
   einen Komparator (436) zum Bereitstellen eines Ausgabesignals basierend auf einem Vergleich des letzten empfangenen Datenwerts mit dem vorhergehend empfangenen Datenwert; und
   eine Logik (438) zum Weiterleiten der ausgewählten verzögerten Signalüberleitung (220, 230, 240, 250) an die Ausgabe in Antwort auf das Komparator-Ausgabesignal.

8. Datenübertragungsgerät (400) gemäß Anspruch 7, wobei der erste Signalgenerator (410) ein Verzögerungselement (414) aufweist, welches mit seiner Ausgabe gekoppelt ist zum Einführen einer Verzögerung in der Ausgabe der ersten Signalüberleitung (210), wobei die Verzögerung mit der Prozessierungszeit der verzögerten Signalüberleitung mittels zumindest eines Teils des weiteren Signalgenerators (430) übereinstimmt.

9. Datenempfangsgerät (500), aufweisend:

   eine erste Eingabe zum Empfangen einer ersten Signalüberleitung (210) von einem ersten Leiter (312) eines Datenkommunikationsbusses (310);
   einen Satz von weiteren Eingaben zum Empfangen, von einem Satz von weiteren Leitern (314) des Datenkommunikationsbusses (310) nach einer vordefinierten Verzögerung bezüglich des Empfangs der ersten Signalüberleitung (210), von entsprechenden verzögerten Signalüberleitungen (220, 230, 240, 250) von einer Mehrzahl von verzögerten Signalüberleitungen (220; 230; 240; 250), wobei jede verzögerte Signalüberleitung (220, 230, 240, 250) einen entsprechenden Datenwert von einer Mehrzahl von Datenwerten definiert;
   einen Signalgenerator (510), welcher mit der ersten Eingabe gekoppelt ist, zum Erzeugen, nach einer vordefinierten Verzögerung bezüglich des Empfangs der ersten Signalüberleitung, einer Mehrzahl von verzögerten weiteren Signalüberleitungen, wobei jede verzögerte weitere Signalüberleitung einen entsprechenden Datenwert von der Mehrzahl von Datenwerten definiert;
   Dekodierungsmittel (520), welche mit dem Satz von weiteren Eingaben und dem Signalgenerator (510) gekoppelt sind, zum Dekodieren der entsprechenden verzögerten Signalüberleitungen (220, 230, 240, 250) in die entsprechenden Datenwerte basierend auf der Mehrzahl von verzögerten weiteren Signalüberleitungen; und
   einen Satz von Ausgaben (540) zum Empfangen der dekodierten Datenwerte von dem Dekodierungsmittel (520), **dadurch gekennzeichnet, dass** die erste Signalüberleitung (210) eine Kante eines Pulses (211) ist, welcher eine definierte Pulsbreite hat, wobei die Pulsbreite einen zweiten Datenwert definiert, und **dadurch gekennzeichnet, dass** das Datenempfangsgerät ferner ausgebildet ist, den Puls (211) von dem ersten Leiter (312) zu empfangen, die Breite des empfangenen Pulses zu bestimmen und den zweiten Datenwert von der gemessenen Pulsbreite zu bestimmen.

10. Datenempfangsgerät (500) gemäß Anspruch 9, wobei das Dekodierungsmittel (520) aufweist:

    Signalüberleitungsdetektionsmittel (522) zum Detektieren der entsprechenden verzögerten Signalüberleitungen;
    einen Satz von Registern (524), wobei jeder mit dem Signalgenerator (510) zum Erfassen einer verzögerten weiteren Signalüberleitung in Antwort auf das Signaldetektionsmittel (522) gekoppelt ist; und
    einen Satz von Dekodierlogikblöcken (526), wobei jeder zwischen einem Register von dem Satz von Registern (524) und einer entsprechenden Ausgabe (540) zum der Ausgabe Bereitstellen eines Datenwerts von dem Bereich von Werten basierend auf der verzögerten weiteren Signalüberleitung, welche mittels des Registers (524) erfasst ist, gekoppelt ist.

11. Datenempfangsgerät (500) gemäß Anspruch 9 oder 10, wobei der Signalgenerator (510) eine Verzögerungskette aufweist, welche eine Mehrzahl von Verzögerungselementen (512) aufweist, wobei jedes Verzögerungselement (512) eine Ausgabe zum Erzeugen einer verzögerten weiteren Signalüberleitung von der Mehrzahl von verzögerten weiteren Signalüberleitungen aufweist.

**12.** Datenempfangsgerät gemäß Anspruch 11, wobei jedes Verzögerungselement (512) mittels eines Satzes von Steuersignalen (C0 bis C4) programmierbar ist.

**13.** Datenempfangsgerät gemäß Anspruch 12, wobei jedes Verzögerungselement (512) eine Mehrzahl von Shunt-Kondensatoren (610) aufweist, wobei jeder Shunt-Kondensator (610) auf ein Steuersignal (C0, C1, C2, C3, C4) von dem Satz von Steuersignalen (C0 bis C4) anspricht.

**14.** Datenempfangsgerät (500) gemäß Anspruch 13, wobei jeder Shunt-Kondensator (610) eine unterschiedliche Kapazität hat.

**15.** Datenempfangsgerät (500) gemäß Anspruch 12, 13 oder 14, ferner aufweisend eine Kalibrierungsschaltung (900) zum Erzeugen des Satzes von Steuersignalen (C0 bis C4), wobei die Kalibrierungsschaltung (900) aufweist:

einen Steuerblock (920), welcher ausgebildet ist, die erste Signalüberleitung (210), eine verzögerte Signalüberleitung (220) und eine entsprechende verzögerte weitere Signalüberleitung zu empfangen, wobei der Steuerblock auf ein Kalibrierungssignal (910) anspricht;
einen Steuersignalgenerator (930) zum Bereitstellen der entsprechenden Steuersignale (C0 bis C4), wobei der Steuersignalgenerator (930) auf das Kalibrierungssignal (910) anspricht;
ein erstes Register (942), welches mit dem Steuersignalgenerator (930) zum Empfangen eines ersten Satzes von Steuersignalen (C0 bis C4) gekoppelt ist;
ein zweites Register (944), welches mit dem Steuersignalgenerator (930) zum Empfangen eines zweiten Satzes von Steuersignalen (C0 bis C4) gekoppelt ist, wobei das erste und das zweite Register auf den Steuerblock (920) ansprechen;
einen Mittelwertblock (946), welcher mit dem ersten Register (944) und dem zweiten Register (946) zum Bestimmen von Mittelwert-Steuersignalen von dem ersten Satz von Steuersignalen und dem zweiten Satz von Steuersignalen gekoppelt ist, wobei der Mittelwertblock (946) einen Satz von Ausgaben hat, welche mit der Mehrzahl von Shunt-Kondensatoren (610) gekoppelt sind, um den Shunt-Kondensatoren (610) einen Mittelwert des ersten und des zweiten Satzes von Steuersignalen bereitzustellen.

**16.** System (300) aufweisend:

ein Datenübertragungsgerät (400) gemäß einem der Ansprüche 5 bis 8;
ein Datenempfangsgerät (500) gemäß einem der Ansprüche 9 bis 15; und einen Datenkommunikationsbus (310), aufweisend:
einen ersten Leiter (312), welcher zwischen der ersten Ausgabe des Datenübertragungsgeräts (400) und der ersten Eingabe des Datenempfangsgeräts (500) gekoppelt ist; und
einen Satz von weiteren Leitern (314), welche zwischen dem Satz von weiteren Ausgaben des Datenübertragungsgeräts (400) und dem Satz von weiteren Eingaben des Datenempfangsgeräts (500) gekoppelt sind.

**17.** System (300) gemäß Anspruch 16, wobei das System (300) auf einer einzelnen integrierten Schaltung lokalisiert ist.

**18.** System (300) gemäß Anspruch 16, wobei das Datenübertragungsgerät (400) und das Datenempfangsgerät (500) auf verschiedenen integrierten Schaltungen beherbergt sind und wobei der Datenkommunikationsbus (310) zumindest teilweise auf einem Träger der verschiedenen integrierten Schaltungen lokalisiert ist.

**19.** Integriertes Schaltungsmodul zum Kommunizieren von Daten über einen Datenkommunikationsbus (310) in Übereinstimmung mit dem Verfahren gemäß Anspruch 1 bis 4, wobei das integrierte Schaltungsmodul aufweist:

ein Datenübertragungsgerät (400) gemäß einem der Ansprüche 5 bis 8 zum Übermitteln von Daten an den Bus (310); und ein Datenempfangsgerät (500) gemäß einem der Ansprüche 9 bis 14 zum Empfangen von Daten von dem Bus (310).

**Revendications**

**1.** Procédé (100) de communication de données sur un bus de communication de données (310) comprenant un premier conducteur (312) et un ensemble de conducteurs supplémentaires (314), consistant à :

fournir au premier conducteur (312) une première transition de signal (210) destinée à indiquer le début d'une première période de communication de données (T1) ; et

fournir à un conducteur supplémentaire (314), après un retard prédéfini par rapport à la fourniture de la première transition de signal (210), une transition de signal retardée (220), le retard prédéfini définissant une première valeur de donnée,

**caractérisé en ce que** :

la première transition de signal (210) est un flanc d'une impulsion (211) ayant une largeur d'impulsion prédéfinie, ladite largeur d'impulsion définissant une deuxième valeur de donnée, le procédé consistant en outre à :

fournir au premier conducteur (312) l'impulsion (211) ;

recevoir l'impulsion (211) provenant du premier conducteur (312) ;

déterminer la largeur de l'impulsion reçue (211) ; et

déterminer la deuxième valeur de donnée à partir de la largeur d'impulsion mesurée.

2. Procédé tel que revendiqué dans la revendication 1, consistant en outre à :

recevoir la première transition de signal (210) provenant du premier conducteur (312) ;

recevoir la transition de signal retardée (220) provenant du conducteur supplémentaire (314) ;

déterminer le retard entre la première transition de signal (210) et la transition de signal retardée (220) ; et

déterminer la première valeur de donnée à partir du retard déterminé.

3. Procédé tel que revendiqué dans la revendication 1 ou 2, consistant à :

fournir au premier conducteur (312) une deuxième transition de signal (212) permettant d'indiquer le début d'une période de communication de données supplémentaire (T2) ;

fournir au conducteur supplémentaire (314) une transition de signal retardée supplémentaire (222), après un retard prédéfini supplémentaire par rapport à la fourniture de la deuxième transition de signal (212), le retard prédéfini supplémentaire définissant une troisième valeur de donnée ;

recevoir la deuxième transition de signal (212) provenant du premier conducteur (312) ;

recevoir la transition de signal retardée supplémentaire (222) provenant du conducteur supplémentaire (314) ;

déterminer un retard supplémentaire entre la deuxième transition de signal (212) et la transition de signal retardée supplémentaire (222) ; et

déterminer la troisième valeur de donnée à partir du retard supplémentaire mesuré.

4. Procédé tel que revendiqué dans la revendication 3, dans lequel ladite transition de signal retardée supplémentaire (222) est fournie si la troisième valeur de donnée diffère de la première valeur de donnée, et dans lequel la détermination de la troisième valeur de donnée à partir du retard supplémentaire déterminé comprend l'affectation de la première valeur de donnée à la troisième valeur de donnée si aucune transition de signal retardée supplémentaire n'est reçue.

5. Dispositif d'émission de données (400), comprenant :

un premier générateur de signaux (410) qui est prévu pour fournir une première transition de signal (210) permettant d'indiquer le début d'une première période de communication de données (T1), le premier générateur de signaux (410) ayant une première sortie de couplage à un premier conducteur (312) d'un bus de communication de données (310), et qui est apte à répondre à un signal externe (412) ; et

un ensemble de générateurs de signaux supplémentaires (430) aptes à répondre au premier générateur de signaux (410), chaque générateur de signaux supplémentaire (430) étant prévu pour fournir, après un retard prédéfini par rapport à la fourniture de la première transition de signal (210), une transition de signal retardée (220, 230, 240, 250) parmi une pluralité de transitions de signal retardées (220 ; 230 ; 240 ; 250), chaque transition de signal retardée (220, 230, 240, 250) définissant une valeur de donnée respective parmi une pluralité de valeurs de données ; chaque générateur de signaux supplémentaire (430) ayant :

un ensemble d'entrées (440) permettant de recevoir une valeur de donnée parmi la pluralité de valeurs de données ; et

un ensemble de sorties supplémentaires permettant de fournir aux conducteurs supplémentaires respectifs (314) parmi un jeu de conducteurs supplémentaires du bus de communication de données (310) des transitions de signal retardées respectives (220, 230, 240, 250),

**caractérisé en ce que** :

le premier générateur de signaux (410) est prévu pour fournir une impulsion (211) ayant une largeur d'impulsion prédéfinie, ladite largeur d'impulsion définissant une deuxième valeur de donnée.

**6.** Dispositif d'émission de données (400) tel que revendiqué dans la revendication 5, dans lequel le premier générateur de signaux (410) est couplé à l'ensemble de générateurs de signaux supplémentaires (430) par l'intermédiaire d'une ligne à retard (420), la ligne à retard (420) étant prévue pour fournir la pluralité de transitions de signal retardées (220 ; 230 ; 240 ; 250).

**7.** Dispositif d'émission de données (400) tel que revendiqué dans la revendication 5 ou 6, dans lequel chaque générateur de signaux supplémentaire (430) comprend :

des moyens de sélection (432, 434) permettant de sélectionner une transition de signal retardée (220, 230, 240, 250) parmi la pluralité de transitions de signal retardées (220 ; 230 ; 240 ; 250) en réponse à la valeur de donnée reçue sur l'ensemble des entrées (440) ;
un comparateur (436) permettant de délivrer un signal de sortie sur la base d'une comparaison de la dernière valeur de donnée reçue et de la valeur de donnée reçue précédemment ; et un circuit logique (438) permettant de faire suivre la transition de signal retardée sélectionnée (220, 230, 240, 250) vers la sortie en réponse au signal de sortie du comparateur.

**8.** Dispositif d'émission de données (400) tel que revendiqué dans la revendication 7, dans lequel le premier générateur de signaux (410) comprend un élément à retard (414) couplé à sa sortie afin d'introduire un retard pour la sortie de la première transition de signal (210), ledit retard étant adapté au temps de traitement de la transition de signal retardée par au moins une partie du générateur de signaux supplémentaire (430).

**9.** Dispositif de réception de données (500), comprenant :

une première entrée permettant de recevoir une première transition de signal (210) provenant d'un premier conducteur (312) d'un bus de communication de données (310) ;
un ensemble d'entrées supplémentaires permettant de recevoir, à partir d'un ensemble de conducteurs supplémentaires (314) du bus de communication de données (310) et après un retard prédéfini par rapport à la réception de la première transition de signal (210), des transitions de signal retardées respectives (220, 230, 240, 250) parmi une pluralité de transitions de signal retardées (220 ; 230 ; 240 ; 250), chaque transition de signal retardée (220, 230, 240, 250) définissant une valeur de donnée respective parmi une pluralité de valeurs de données ;
un générateur de signaux (510) couplé à la première entrée pour produire, après un retard prédéfini par rapport à la réception de la première transition de signal, une pluralité de transitions de signal supplémentaires retardées, chaque transition de signal supplémentaire retardée définissant une valeur de donnée respective parmi la pluralité de valeurs de données ;
des moyens de décodage (520) couplés à l'ensemble d'entrées supplémentaires et au générateur de signaux (510) pour décoder les transitions de signal retardées respectives (220, 230, 240, 250) sous la forme des valeurs de données correspondantes sur la base de la pluralité de transitions de signal supplémentaires retardées ; et
un ensemble de sorties (540) permettant de recevoir les valeurs de données décodées provenant des moyens de décodage (520),
**caractérisé en ce que** la première transition de signal (210) est un flanc d'une impulsion (211) ayant une largeur d'impulsion prédéfinie, ladite largeur d'impulsion définissant une deuxième valeur de donnée, et **en ce que** le dispositif de réception de données est en outre apte à recevoir l'impulsion (211) provenant du premier conducteur (312), à déterminer la largeur de l'impulsion reçue et à déterminer la deuxième valeur de donnée à partir de la largeur d'impulsion mesurée.

**10.** Dispositif de réception de données (500) tel que revendiqué dans la revendication 9, dans lequel les moyens de décodage (520) comprennent :

des moyens de détection de transitions de signal (522) permettant de détecter les transitions de signal retardées respectives ;
un ensemble de registres (524), chacun d'eux étant couplé au générateur de signaux (510) pour capturer une transition de signal supplémentaire retardée en réponse aux moyens de détection de transitions de signal (522) ; et
un ensemble de blocs logiques de décodage (526), chacun d'eux étant couplé entre un registre de l'ensemble de registres (524) et une sortie respective (540) pour délivrer en sortie une valeur de donnée se situant dans la plage de ces valeurs sur la base de la transition de signal supplémentaire retardée capturée par le registre (524).

11. Dispositif de réception de données (500) tel que revendiqué dans la revendication 9 ou 10, dans lequel le générateur de signaux (510) comprend une chaîne de retard comprenant une pluralité d'éléments à retard (512), chaque élément à retard (512) comprenant une sortie permettant de délivrer une transition de signal supplémentaire retardée parmi la pluralité de transitions de signal supplémentaires retardées.

12. Dispositif de réception de données tel que revendiqué dans la revendication 11, dans lequel chaque élément de retard (512) est programmable par un ensemble de signaux de commande (C0 à C4).

13. Dispositif de réception de données tel que revendiqué dans la revendication 12, dans lequel chaque élément de retard (512) comprend une pluralité de condensateurs de dérivation (610), chaque condensateur de dérivation (610) étant apte à répondre à un signal de commande (C0, C1, C2, C3, C4) provenant de l'ensemble de signaux de commande (C0 à C4).

14. Dispositif de réception de données (500) tel que revendiqué dans la revendication 13, dans lequel chaque condensateur de dérivation (610) a une valeur de capacité différente.

15. Dispositif de réception de données (500) tel que revendiqué dans la revendication 12, 13 ou 14, comprenant en outre un circuit d'étalonnage (900) pour délivrer l'ensemble de signaux de commande (C0 à C4), le circuit d'étalonnage (900) comprenant :

un bloc de commande (920) qui est prévu pour recevoir la première transition de signal (210), une transition de signal retardée (220) et une transition de signal supplémentaire retardée correspondante, le bloc de commande étant apte à répondre à un signal d'étalonnage (910) ;
un générateur de signaux de commande (930) permettant de délivrer les signaux de commande respectifs (C0 à C4), le générateur de signaux de commande (930) étant apte à répondre au signal d'étalonnage (910) ;
un premier registre (942) couplé au générateur de signaux de commande (930) pour recevoir un premier ensemble de signaux de commande (C0 à C4) ;
un deuxième registre (944) couplé au générateur de signaux de commande (930) pour recevoir un deuxième ensemble de signaux de commande (C0 à C4), les premier et deuxième registres étant aptes à répondre au bloc de commande (920) ;
un bloc de valeur moyenne (946) couplé au premier registre (944) et au deuxième registre (946) pour déterminer des signaux de commande de valeur moyenne à partir du premier ensemble de signaux de commande et du deuxième ensemble de signaux de commande, le bloc de valeur moyenne (946) ayant un ensemble de sorties couplées à la pluralité de condensateurs de dérivation (610) pour fournir aux condensateurs de dérivation (610) une valeur moyenne des premier et deuxième ensembles de signaux de commande.

16. Système (300) comprenant :

un dispositif d'émission de données (400) tel que revendiqué dans l'une quelconque des revendications 5 à 8 ;
un dispositif de réception de données (500) tel que revendiqué dans l'une quelconque des revendications 9 à 15 ; et
un bus de communication de données (310) comprenant :
un premier conducteur (312) couplé entre la première sortie du dispositif d'émission de données (400) et la première entrée du dispositif de réception de données (500) ; et
un ensemble de conducteurs supplémentaires (314) couplé entre l'ensemble de sorties supplémentaires du dispositif d'émission de données (400) et l'ensemble d'entrées supplémentaires du dispositif de réception de données (500).

17. Système (300) tel que revendiqué dans la revendication 16, le système (300) étant situé sur un circuit intégré unique.

18. Système (300) tel que revendiqué dans la revendication 16, dans lequel le dispositif d'émission de données (400) et le dispositif de réception de données (500) sont situés sur des circuits intégrés différents, et dans lequel le bus de communication de données (310) est au moins en partie situé sur un support des différents circuits intégrés.

19. Module de circuit intégré pour la communication de données sur un bus de communication de données (310) en conformité avec le procédé tel que revendiqué dans les revendications 1 à 4, le module de circuit intégré comprenant :

un dispositif d'émission de données (400) tel que revendiqué dans l'une quelconque des revendications 5 à 8 pour émettre des données sur ledit bus (310) ; et
un dispositif de réception de données (500) tel que revendiqué dans l'une quelconque des revendications 9 à 14 pour recevoir des données provenant dudit bus (310).

100

```
┌─────────────────────────────────────────┐
│                   110                    │
└─────────────────────────────────────────┘
                     │
                     ▼
┌─────────────────────────────────────────┐
│                   120                    │
└─────────────────────────────────────────┘
                     │
                     ▼
┌─────────────────────────────────────────┐
│                   130                    │
└─────────────────────────────────────────┘
                     │
                     ▼
┌─────────────────────────────────────────┐
│                   140                    │
└─────────────────────────────────────────┘
                     │
                     ▼
┌─────────────────────────────────────────┐
│                   150                    │
└─────────────────────────────────────────┘
                     │
                     ▼
┌─────────────────────────────────────────┐
│                   160                    │
└─────────────────────────────────────────┘
```

FIG. 1

FIG. 2a

FIG. 2b

FIG. 3

EP 1 987 644 B1

FIG. 4

FIG. 5

FIG. 6

FIG. 7

FIG. 8

EP 1 987 644 B1

FIG. 9

EP 1 987 644 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6020834 A
- US 20040161051 A1
- US 20030016056 A1